# EUROPÄISCHE PATENTSCHRIFT

(11) **EP 1 184 230 B1**
(45) Veröffentlichungstag und Bekanntmachung des Hinweises auf die Patenterteilung: **15.10.2003**
(21) Anmeldenummer: 01117518.9
(22) Anmeldetag: 20.07.2001
(51) Int. Cl.: B60R 16/02, H02G 3/04

(54) **Kabelsatz**
Wire harness
Faisceau électrique

(30) Priorität: 01.09.2000 DE 10042985
(43) Veröffentlichungstag der Anmeldung: 06.03.2002
(73) Patentinhaber: LEONI Bordnetz-Systeme GmbH & Co KG, 90402 Nürnberg (DE)
(72) Erfinder: Käfer, Bernd, 97320 Mainstockheim (DE)
(74) Vertreter: Tergau & Pohl Patentanwälte

(56) Entgegenhaltungen:
- EP-A- 0 713 225
- EP-A- 0 959 545
- DE-C- 4 302 757
- US-A- 5 448 017
- PATENT ABSTRACTS OF JAPAN vol. 1998, no. 11, 30. September 1998 (1998-09-30) -& JP 10 164734 A (SUMITOMO WIRING SYST LTD), 19. Juni 1998 (1998-06-19)

## Beschreibung

Die Erfindung bezieht sich auf einen Kabelsatz mit einem eine Anzahl von Einzelkabeln umgebenden Schutzmantel.

Ein Kobelsatz gemäß dem Oberbegriff des Anspruchs 1 ist aus EP 0 713 225 A bekannt.

Ein derartiger Kabelsatz, auch als Kabelbaum bezeichnet, wird insbesondere im Kfz-Bereich verwendet. Der Kabelsatz ist dabei in der Regel als eine vorgefertigte Baueinheit ausgeführt, die bei der Montage des Kraftfahrzeugs an der für den Kabelsatz vorgesehenen Stelle verlegt wird. Dadurch ist eine aufwendige Verlegung der Einzelkabel vermieden. Die Schutzhülle um die Einzelkabel dient zum Schutz der Einzelkabel vor mechanischen Beschädigungen sowie zugleich als Abdichtung gegenüber der Umgebung. Unter Schutzhülle wird hierbei einerseits eine flexible Schutzhülle verstanden, wie beispielsweise eine Gummitülle oder Manschette, durch die die Einzelkabel lose hindurchgeführt werden. Unter Schutzhülle wird andererseits auch eine Umschäumung der Einzelkabel verstanden, wie sie insbesondere zur Erzeugung von formstabilen Kabelsätzen verwendet wird.

Eine kritische Stelle im Kfz-Bereich ist die elektrische Versorgung der in einer Tür angebrachten elektrischen Komponenten, wie beispielsweise Fensterheber und Lautsprecherboxen. Hierzu müssen die Einzelkabel aus der Karosserie in die Tür über den Türschwenkbereich geführt werden. In der Regel sind in der Karosseriesäule, an der die Tür gelagert ist, sowie an der Tür selbst jeweils in den Stirnseiten Löcher für die Durchführung des Kabelsatzes eingearbeitet. Unter Stirnseite wird hierbei der Bereich verstanden, der von der Fahrzeugaußenseite zur Fahrzeuginnenseite gerichtet ist. Die Durchführungslöcher schwächen jedoch die Stabilität. Daher ist es vorgesehen, die Durchführungslöcher nicht an den Stirnseiten, sondern an den Fahrzeuginnenseiten vorzusehen.

Wird nun ein Kabelsatz verwendet, der mit einem ersten Endstück an der Karosseriesäule und mit einem zweiten Endstück an der Türe befestigt wird, so besteht die Gefahr, dass bei der Montage die beiden Endstücke gegeneinander um 360° verdreht werden, so dass die lose im Kabelsatz geführten Einzelkabel verdrillt werden. Aufgrund der im Türschwenkbereich in der Regel als Manschette oder Tülle ausgebildeten Schutzhülle wird diese Verdrillung nicht erkannt. Die Verdrillung kann dazu führen, dass die Einzelkabel einer hohen mechanischenBelastung ausgesetzt sind.

Der Erfindung liegt daher die Aufgabe zugrunde, einen Kabelsatz anzugeben, der einen ordnungsgemäßen Einbau gewährleistet.

Die Aufgabe wird gemäß der Erfindung gelöst durch einen Kabelsatz mit einem eine Anzahl von Einzelkabeln umgebenden Schutzmantel, der umfasst ein erstes Endstück und ein zweites Endstück sowie ein zwischen diesen angeordnetes Zwischenstück, wobei das Zwischenstück am ersten Endstück drehfest fixiert und am zweiten Endstück über einen begrenzten Winkelbereich drehbar gelagert ist.

Unter Zwischenstück wird hierbei insbesondere eine wellrohrähnliche Schutzmanschette oder Schutztülle verstanden, in der die Einzelkabel lose einliegen.

Dieser Ausgestaltung liegt einerseits die Idee zugrunde, eine unsachgemäße Verdrehung des Kabelsatzes optisch durch eine Verdrehung des Zwischenstücks anzuzeigen. Das Zwischenstück wird also bei einem unsachgemäßen Einbau zusammen mit den Einzelkabeln verdreht. Dies ist ein auffälliges optisches Zeichen, so dass der mit dem Einbau befasste Monteur sofort den unsachgemäßen Einbau erkennt. Dieser Ausgestaltung liegt andererseits die Idee zugrunde, gleichzeitig eine gewisse Verdrehung zuzulassen, um ein optisch nicht erwünschtes Verdrillen der Manschette beim Türöffnen auszuschließen. Diese beiden Anforderungen werden erfüllt durch die Fixierung des Zwischenstücks an seinem einen Ende und durch die lediglich über einen gewissen Winkelbereich drehbare Lagerung an seinem anderen Ende. Bei einer Verdrehung über den vorgegebenen Winkelbereich hinaus verdreht sich das Zwischenstück und die unzulässige Verdrehung ist erkennbar.

Vorzugsweise ist zur Begrenzung des Winkelbereichs am Zwischenstück ein Anschlag und am zweiten Endstück ein Gegenanschlag vorgesehen. Der Gegenanschlag wirkte dabei als Widerlager für den Anschlag. Durch diese Ausgestaltung ist ein mechanisch sicherer Verdrehschutz verwirklicht.

Für eine einfache und zugleich zuverlässige Ausbildung sind der Anschlag und der Gegenanschlag gemäß einer bevorzugten Ausführung gebildet durch einen Zapfen und ein Kreisringsegment. Der Zapfen um das Kreisringsegment sind dabei in der Montagestellung derart zueinander positioniert, dass der Zapfen in der durch das Kreisringsegment festgelegten Segmentöffnung geführt wird und an den freien Stirnseiten des Kreisringsegments anschlägt.

Zweckdienlicherweise bestimmt dabei der Öffnungswinkel der Segmentöffnung im Wesentlichen den begrenzten Winkelbereich, über den eine Drehung des Kabelsatzes in sich ermöglicht ist, ohne dass das Zwischenstück verdrillt wird. Unter "im Wesentlichen" ist hierbei zu verstehen, dass der Öffnungswinkel der Segmentöffnung abzüglich des Winkels, den der Zapfen durch seine Ausdehnung überstreicht, den Winkelbereich definiert.

Zweckdienlicherweise ist am ersten Endstück ein Fixierzapfen vorgesehen, über den das Zwischenstück gestülpt ist, und zwar derart, dass zwischen dem Fixierzapfen und dem Zwischenstück eine verdrehsichere Verbindung ausgebildet ist. Durch die Anordnung eines Fixierzapfens am Endstück ist die Fixierung des Zwischenstücks in einfacher Weise ermöglicht.

Dabei ist die verdrehsichere Verbindung vorzugsweise als eine verdrehsichere Reibverbindung ausgebildet. Hierzu weist der Fixierzapfen vorteilhafterweise ein Übermaß auf, d.h. sein Außendurchmesser ist zumindest so groß oder größer wie der Innendurchmesser des Zwischenstücks. Ein derartiger Reibschluss ist konstruktiv sehr einfach zu verwirklichen. Alternativ zum Reibschluss kann die verdrehsichere Verbindung beispielsweise auch durch eine formschlüssig Verbindung, insbesondere nach dem Nut-Feder-Prinzip, verwirklicht sein.

Vorzugsweise ist am zweiten Endstück ein Führungszapfen vorgesehen, über den das Zwischenstück gestülpt ist, und zwar derart, dass das Zwischenstück um den Führungszapfen drehbar ist. Auch hier ist durch die Ausgestaltung des Führungszapfens am zweiten Endstück eine herstellungstechnisch einfache Ausgestaltung erreicht, um das Zwischenstück zu führen. Für die Drehbarkeit ist hierbei insbesondere vorgesehen, dass der Führungszapfen ein Untermaß aufweist, d.h. dass sein Außendurchmesser kleiner als der Innendurchmesser des Zwischenstücks ist.

Vorzugsweise ist ein Sicherungselement gegen eine axiale Verschiebung des Zwischenstücks relativ zu den beiden Endstücken vorgesehen. Hierdurch wird insbesondere verhindert, dass das Zwischenstück unbeabsichtigt vom Führungszapfen herunter gleitet und somit die Wirksamkeit des durch den Anschlag und den Gegenanschlag gebildeten Verdrehschutzes ausgehebelt ist.

Zweckdienlicherweise ist dabei das Sicherungselement durch einen insbesondere um den Führungszapfen und/oder den Fixierzapfen umlaufenden Sicherungssteg gebildet. Dieser greift in das vorzugsweise nach Art eines Faltenbalgs ausgebildete Zwischenstück ein. Neben der Sicherung gegen eine axiale Verschiebung ist hierdurch auch in gewisser Weise eine Abdichtung erzielt.

Im Sinne einer einfachen kostengünstigen Herstellung ist gemäß einer bevorzugten Ausführung der Anschlag mit dem Zwischenstück einstückig und aus dem gleichen Material ausgebildet. In der Regel besteht das Zwischenstück hierbei aus einem Gummi oder Kautschukmaterial.

Alternativ hierzu sind der Anschlag und das Zwischenstück aus unterschiedlichen Materialien ausgebildet. Der Anschlag wird dabei vorzugsweise durch ein Kunststoffmaterial gebildet und ist am insbesondere als Gummimanschette ausgebildeten Zwischenstück in geeigneter Weise befestigt. Durch eine geeignete Materialwahl werden eventuell störende Geräusche aufgrund der Verdrehung des Anschlags gegenüber dem Führungszapfen vermieden.

Ein Ausführungsbeispiel der Erfindung wird im Folgenden anhand der Figuren näher erläutert. Es zeigen jeweils in schematischen Darstellungen:
- Fig. 1: eine Seitenansicht im Verbindungsbereich zwischen einer Karosserie und einer Tür eines Kraftfahrzeugs,
- Fig. 2: eine Aufsicht auf den Verbindungsbereich gemäß Fig. 1,
- Fig. 3: eine ausschnittsweise Darstellung eines Kabelsatzes im Bereich eines ersten Endstücks,
- Fig. 4: eine ausschnittsweise Darstellung des Kabelsatzes im Bereich eines zweiten Endstücks, und
- Fig. 5: eine Schnittansicht entlang der Linie V-V gemäß Fig. 4 im Bereich eines Führungszapfens.

In den Figuren sind gleichwirkende Merkmale mit den gleichen Bezugszeichen versehen.

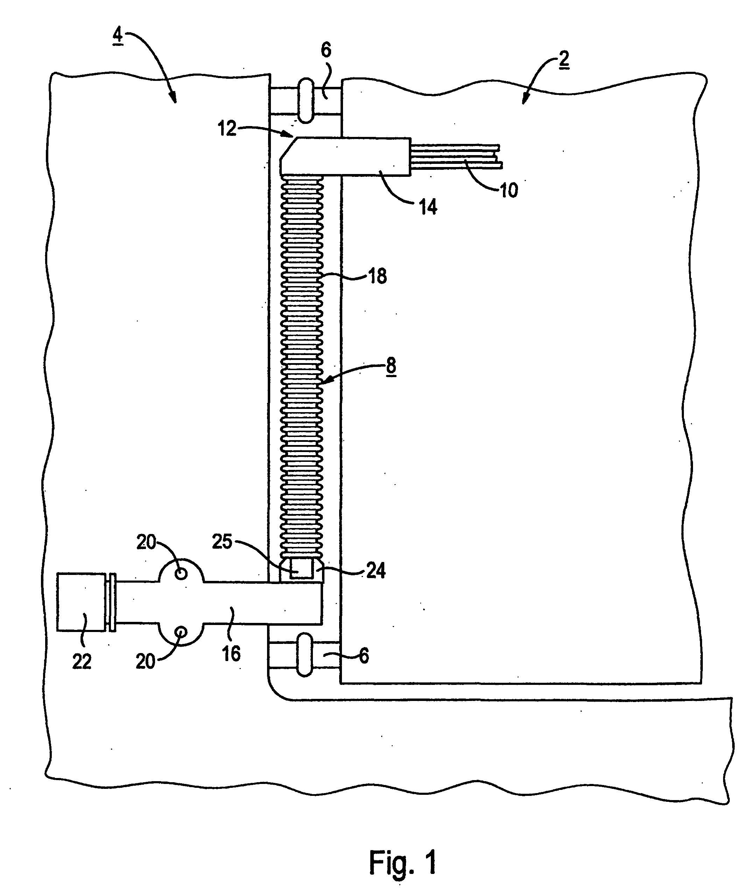

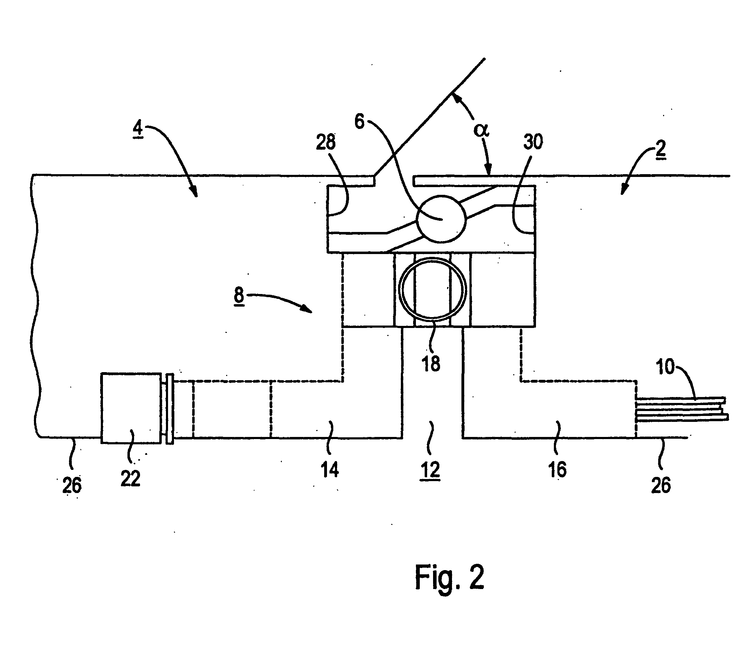

Gemäß der stark vereinfachten Darstellung nach den Figuren 1 und 2 ist bei einem Kraftfahrzeug eine Tür 2 an der Karosserie 4, insbesondere an der sogenannten A-Säule, schwenkbar über Scharniere 6 gelagert. Zur elektrischen Versorgung von in der Tür 2 angeordneten elektrischen Verbrauchern (nicht dargestellt) ist ein vorgefertigter Kabelsatz 8 vorgesehen, der eine Anzahl von Einzelkabel 10 umfasst und diese von der Karosserie 4 über einen Schwenkbereich 12 zwischen der Tür 2 und der Karosserie 4 in die Türe 2 führt. Der Kabelsatz 8 verläuft im Schwenkbereich 12 senkrecht nach oben und ist als vorgefertigte Baueinheit ausgebildet. Die Tür 2 lässt sich im Schwenkbereich 12 um einen Schwenkwinkel α, der etwa im Bereich von 80° liegt, verschwenken.

Die Einzelkabel 10 sind hierbei durch eine Schutzhülle des Kabelsatzes 8 umgeben, welche umfasst ein erstes Endstück 14, ein zweites Endstück 16 sowie ein zwischen diesen beiden Endstücken 14,16 angeordnetes und nach Art einer Gummitülle ausgebildetes Zwischenstück 18. Das zweite Endstück 16 weist Befestigungslaschen 20 zur Befestigung an der Karosserie 4 auf. Darüber hinaus weist das zweite Endstück 16 eine beispielsweise nach Art eines Adapters ausgebildete Trennstelle 22 auf, an der der Kabelsatz 8 trennbar ist. Im Verbindungsbereich zum Zwischenstück 18 ist am zweiten Endstück 16 ein Gegenanschlag 24 vorgesehen, welcher mit einem am Zwischenstück 18 angeformten Anschlag 25 zusammenwirkt. Die beiden Endstücke 14,16 sind insbesondere als geschäumte Teile und formstabil ausgeführt. Das Zwischenstück 18 ist demgegenüber vorzugsweise als Gummi- oder Kunststoffhülle ausgeführt, durch die die Einzelkabel 10 lose geführt sind.

Wie insbesondere der Fig. 2 zu entnehmen ist, sind die beiden Endstücke 14,16 als Winkelstücke ausgebildet und führen die Einzelkabel 10 von einer Fahrzeuginnenseite 26 in den Schwenkbereich 12 zwischen der Karosserie 4 und der Tür 2. Herkömmlich wird der Kabelsatz 8 von der Karosseriestirnseite 28 über den Schwenkbereich 12 durch eine Türstirnseite 30 hindurchgeführt. Hierzu sind sowohl auf Karosserieseite als auch auf Türseite Durchführungslöcher notwendig, die - aufgrund des relativ schmalen Stirnseitenbereichs - die Stabilität schwächen.

Bei der Montage des Kabelsatzes 8 besteht die Gefahr, dass die beiden Endstükke 14,16 unsachgemäß gegeneinander verdreht werden. Beispielsweise wird das zweite Endstück 16 um 360° gegenüber der vorgesehenen Einbaulage verdreht, so dass es zwar in der richtigen Winkelstellung an der Karosserie 4 anliegt, dass jedoch die Einzelkabel 10 im Bereich des Zwischenstücks 18 verdrillt sind. Dadurchwerden unter Umständen einer hohen meschanischen Belastung ausgesetzt.

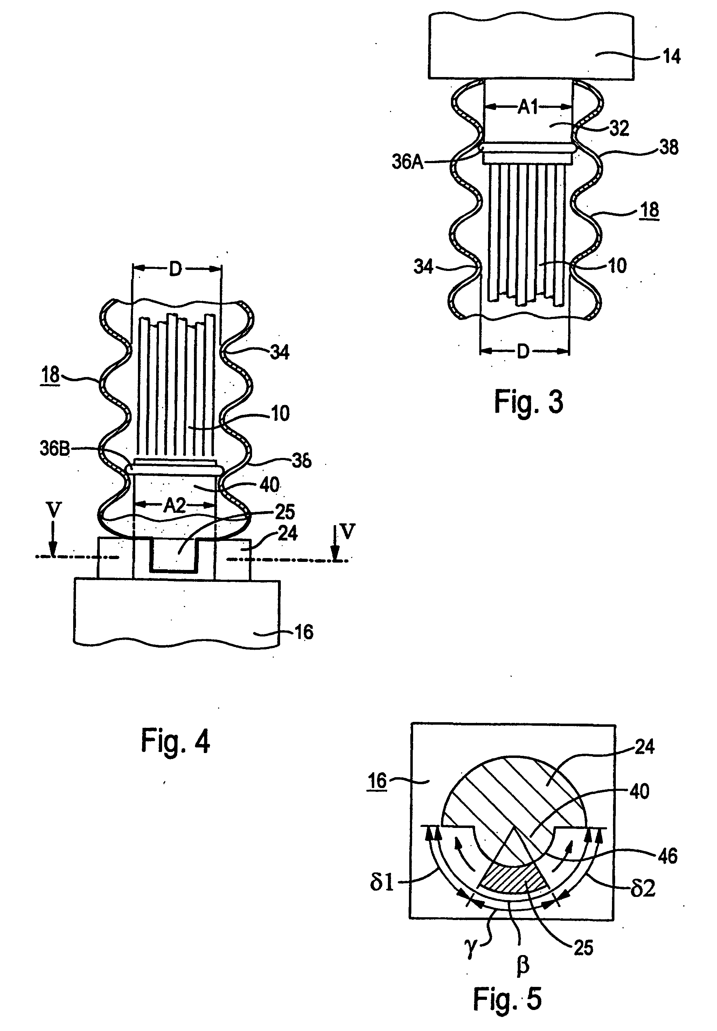

Um einen derartigen unsachgemäßen Einbau zu verhindern, weist der Kabelsatz 8 einen Verdrehschutz auf, wie er im Folgenden anhand der Figuren 3 bis 5 näher erläutert wird. Gemäß Fig. 3 umfasst das erste Endstück 14 stirnseitig einen Fixierzapfen 32, über den das wellrohrartig ausgebildete Zwischenstück 18 gestülpt ist. Die Einzelkabel 10 sind hierbei stirnseitig aus dem Fixierzapfen 32, welcher als geschäumtes Teil einstückig mit dem ersten Endstück 14 ausgebildet ist, herausgeführt und verlaufen im Zwischenstück 18 lose einliegend. Der Außendurchmesser A1 des Fixierzapfens 32 ist dabei gleich groß und vorzugsweise größer als der Innendurchmesser D des Zwischenstücks 18 im Bereich eines Wellentals 34. Der Fixierzapfen 32 weist also zum Zwischenstück 18 ein Übermaß auf, so dass er mit dem Zwischenstück 18 einen Reibschluss bildet. Ein Verdrehen des Zwischenstücks 18 gegenüber dem Fixierzapfen 32 ist somit vermieden. Um den Fixierzapfen 32 umlaufend ist ein Sicherungssteg 36A angeordnet. Dieser dient zum einen als Sicherung gegenüber ein unerwünschtes axiales Heruntergleiten des Zwischenstücks 18 vom Fixierzapfen 32. Gleichzeitig erfüllt der Sicherungssteg 36A auch eine gewisse Dichtwirkung. Für diese beiden Funktionen greift der Sicherungssteg 36A in einen Wellenbauch 38 des Zwischenstücks 18 ein.

Das zweite Endstück 16 gemäß Fig. 4 weist an seiner Stirnseite einen Führungszapfen 40 auf, über den das Zwischenstück 18 gestülpt ist. Dabei weist der Führungszapfen 40 ein Untermaß auf, d.h. der Außendurchmesser A2 des Führungszapfens 40 ist kleiner als der Innendurchmesser D des Zwischenstücks 18 im Bereich eines Wellentals 34. Am Führungszapfen 40 ist - analog wie am Fixierzapfen 32 - ein umlaufender Sicherungssteg 36B angeordnet, der ein axiales Verschieben des Zwischenstücks 18 gegenüber dem Führungszapfen 40 verhindert.

Wie den Figuren 4 und 5 zu entnehmen ist, ist der am Zwischenstück 18 endseitig angeformte Anschlag 25 nach Art eines Zapfens ausgebildet. Der am zweiten Endstück 16 angebrachte Gegenanschlag 24 ist gebildet durch ein Kreisringsegment, und zwar insbesondere durch ein Halbkreisringsegment mit einer Segmentöffnung 46, die einen Öffnungswinkel β von 180° überstreicht. Der Führungszapfen 40 und der Gegenanschlag 24 sind vorzugsweise einstückig mit dem zweiten Endstück 16 als geschäumtes Formteil ausgebildet. Der Öffnungswinkel β abzüglich eines Anschlagwinkels γ legt einen Winkelbereich δ1 + δ2 fest, über den das Zwischenstück 18 gegenüber dem Führungszapfen 40 drehbar ist. Der Anschlagwinkel γ ist dabei definiert als der Winkel, der vom Anschlag 25 überstrichen wird.

Aufgrund des begrenzten Winkelbereichs δ1 + δ2 ist eine Relativdrehung zwischen den beiden Endstücken 14,16 ermöglicht, ohne dass das Zwischenstück 18 in sich verdreht wird. Dadurch wird bei einem Schwenken der Tür 2 um den Schwenkwinkel α ein optisch unerwünschtes Verdrehen des Zwischenstücks 18 vermieden. Gleichzeitig wird durch die Ausbildung des begrenzten Winkelbereichs δ1 + δ2 erzielt, dass bei einem Verdrehen über diesen Winkelbereich δ1 + δ2 hinaus das Zwischenstück 18 in sich verdreht wird, was sofort optisch erkennbar ist. Wird daher bei der Montage des Kabelsatzes 8 dieser unsachgemäß, also in sich verdreht eingebaut, ist dies sofort anhand des in sich verdrillten Zwischenstücks 18 erkennbar.

### Bezugszeichenliste

- 2: Tür
- 4: Karosserie
- 6: Scharnier
- 8: Kabelsatz
- 10: Einzelkabel
- 12: Schwenkbereich
- 14: erstes Endstück
- 16: zweites Endstück
- 18: Zwischenstück
- 20: Befestigungslasche
- 22: Trennstelle
- 24: Gegenanschlag
- 25: Anschlag
- 26: Fahrzeuginnenseite
- 28: Karosseriestimseite
- 30: Türstirnseite
- 32: Fixierzapfen
- 34: Wellental
- 36A,B: Sicherungssteg
- 38: Wellenbauch
- 40: Führungszapfen
- 46: Segmentöffnung

- A1: Außendurchmesser Fixierzapfen
- A2: Außendurchmesser Führungszapfen
- D: Innendurchmesser Zwischenstück
- α: Schwenkwinkel
- β: Öffnungswinkel
- γ: Anschlagwinkel
- δ1+δ2: Winkelbereich

## Patentansprüche

1. Kabelsatz (8) mit einem eine Anzahl von Einzelkabeln (10) umgebenden Schutzmantel (14,16,18), der ein erstes Endstück (14) und ein zweites Endstück (16) sowie ein zwischen diesen angeordnetes Zwischenstück (18) umfasst; wobei
das Zwischenstück (18) am ersten Endstück (14) drehfest fixiert ist, dadurch gekennzeichent, dass
das Zwischenstück (18) am zweiten Endstück (16) über einen begrenzten Winkelbereich (δ1+δ2) drehbar gelagert ist.

2. Kabelsatz (8) nach Anspruch 1,
**dadurch gekennzeichnet,**
**dass** zur Begrenzung des Winkelbereichs (δ1+δ2) am Zwischenstück (18) ein Anschlag (25) und am zweiten Endstück (16) ein Gegenanschlag (24) vorgesehen ist.

3. Kabelsatz (8) nach Anspruch 2,
**dadurch gekennzeichnet,**
**dass** der Anschlag (25) und der Gegenanschlag (24) gebildet sind durch einen Zapfen und ein Kreisringsegment.

4. Kabelsatz (8) nach Anspruch 3,
**dadurch gekennzeichnet,**
**dass** das Kreisringsegment eine Segmentöffnung (46) aufweist, deren Öffnungswinkel (β) den Winkelbereich (δ1+δ2) im Wesentlichen bestimmt.

5. Kabelsatz (8) nach einem der vorhergehenden Ansprüche,
**dadurch gekennzeichnet,**
**dass** am ersten Endstück (14) ein Fixierzapfen (32) vorgesehen ist, über den das Zwischenstück (18) gestülpt ist, derart, dass zwischen dem Fixierzapfen (32) und dem Zwischenstück (18) eine verdrehsichere Verbindung ausgebildet ist.

6. Kabelsatz (8) nach Anspruch 5,
**dadurch gekennzeichnet,**
**dass** zwischen dem Fixierzapfen (32) und dem Zwischenstück (18) eine verdrehsichere Reibverbindung ausgebildet ist.

7. Kabelsatz (8) nach einem der vorhergehenden Ansprüche,
**dadurch gekennzeichnet,**
**dass** am zweiten Endstück (16) ein Führungszapfen (40) vorgesehen ist, über den das Zwischenstück (18) gestülpt ist, derart, dass das Zwischenstück (18) um den Führungszapfen (40) drehbar ist.

8. Kabelsatz nach Anspruch 7,
**dadurch gekennzeichnet,**
**dass** ein Sicherungselement (36A,B)) gegen eine axiale Verschiebung des Zwischenstücks (18) vorgesehen ist.

9. Kabelsatz (8) nach Anspruch 8, **dadurch gekennzeichnet, dass** das Sicherungselement durch einen insbesondere um den Führungszapfen (40) und/oder den Fixierzapfen (32) umlaufenden Sicherungssteg (36A,B) gebildet ist.

10. Kabelsatz nach einem der Ansprüche 2-4,
**dadurch gekennzeichnet,**
**dass** der Anschlag (25) mit dem Zwischenstück (18) einstückig und aus dem gleichen Material ausgebildet ist.

11. Kabelsatz (8) nach einem der Ansprüche 2-4,
**dadurch gekennzeichnet,**
**dass** der Anschlag (25) und das Zwischenstück (18) aus unterschiedlichen Materialien bestehen.

## Claims

1. Cable set (8) with a protective covering (14, 16, 18) enclosing a number of individual cables (10), which comprises a first end part (14) and a second end part (16) and an intermediate part (18) arranged therebetween, the intermediate part (18) being fixed in terms of rotation on the first end part (14), **characterized in that** the intermediate part (18) is mounted such that it can be rotated over a limited angle range (δ1 + δ2) on the second end part (16).

2. Cable set (8) according to Claim 1, **characterized in that**, in order to limit the angle range (δ1 + δ2), a stop (25) is provided on the intermediate part (18) and a mating stop (24) is provided on the second end part (16).

3. Cable set (8) according to Claim 2, **characterized in that** the stop (25) and the mating stop (24) are formed by a stub and a ring segment.

4. Cable set (8) according to Claim 3, **characterized in that** the ring segment has a segment opening (46), of which the opening angle (β) essentially determines the angle range (δ1 + δ2).

5. Cable set (8) according to one of the preceding claims, **characterized in that** provided on the first end part (14) is a fixing stub (32), over which the intermediate part (18) is fitted such that a rotationally secured connection is formed between the fixing stub (32) and the intermediate part (18).

6. Cable set (8) according to Claim 5, **characterized in that** a rotationally secured frictional connection is formed between the fixing stub (32) and the intermediate part (18).

7. Cable set (8) according to one of the preceding claims, **characterized in that** provided on the second end part (16) is a guide stub (40), over which the intermediate part (18) is fitted such that the intermediate part (18) can be rotated around the guide stub (40).

8. Cable set (8) according to Claim 7, **characterized in that** there is provided a securing element (36A,B) against axial displacement of the intermediate part (18).

9. Cable set (8) according to Claim 8, **characterized in that** the securing element is formed by a securing crosspiece (36A,B) which encircles, in particular, the guide stub (40) and/or the fixing stub (32).

10. Cable set according to one of Claims 2 - 4, **characterized in that** the stop (25) is formed integrally with the intermediate part (18) and from the same material.

11. Cable set (8) according to one of Claims 2 - 4, **characterized in that** the stop (25) and the intermediate part (18) consist of different materials.

## Revendications

1. Faisceau de câble (8) équipé d'une gaine de protection (14, 16, 18) entourant une pluralité de câbles individuels (10), qui comprend une première pièce terminale (14) et une seconde pièce terminale (16) ainsi qu'une pièce intermédiaire (18) disposée entre celles-ci ; la pièce intermédiaire (18) étant disposée fixe en rotation sur la première pièce terminale (14), **caractérisé en ce que** la pièce intermédiaire (18) est disposée à rotation sur la seconde pièce terminale (16) par l'intermédiaire d'une plage angulaire limitée (δ1+δ2).

2. Faisceau de câble (8) selon la revendication 1, **caractérisé en ce qu'**en vue de la limitation de la plage angulaire (δ1+δ2) est prévue sur la pièce intermédiaire (18) une butée (25) et sur la seconde pièce terminale (16) une butée antagoniste (24).

3. Faisceau de câble (8) selon la revendication 2, **caractérisé en ce que** la butée (25) et la butée antagoniste (24) sont formées par un pivot et un segment de couronne.

4. Faisceau de câble (8) selon la revendication 3, **caractérisé en ce que** le segment de couronne présente une ouverture de segment (46), dont l'angle d'ouverture β correspond sensiblement à la plage angulaire (δ1+δ2).

5. Faisceau de câble (8) selon une des revendications précédentes, **caractérisé en ce que** sur la première pièce terminale (14) est prévue un pivot de fixation (32), au-dessus duquel est repliée la pièce intermédiaire (18), de telle sorte qu'entre le pivot de fixation (32) et la pièce intermédiaire (18) est réalisée une liaison résistent à la torsion.

6. Faisceau de câble (8) selon la revendication 5, **caractérisé en ce que**, entre le pivot de fixation (32) et la pièce intermédiaire (18), est réalisée une liaison par friction résistant à la torsion.

7. Faisceau de câble (8) selon une des revendications précédentes, **caractérisé en ce que** sur la seconde pièce terminale (16) est prévu un pivot de guidage (-40), au-dessus duquel est repliée la pièce intermédiaire (18) de telle sorte que la pièce intermédiaire (18) peut tourner autour du pivot de guidage (40).

8. Faisceau de câble selon la revendication 7, **caractérisé en ce que** un élément de fixation (36A, B) est prévu contre un déplacement axial de la pièce intermédiaire (18).

9. Faisceau de câble (8) selon la revendication 8, **caractérisé en ce que** l'élément de fixation est formé par une nervure de fixation (36A, B) entourant en particulier le pivot de guidage (40) et/ou le pivot de fixation (32).

10. Faisceau de câble selon une des revendications 2 à 4, **caractérisé en ce que** la butée (25) est réalisée d'une seule pièce et en même matériau que la pièce intermédiaire (18).

11. Faisceau de câble (8) selon une des revendications 2 à 4, **caractérisé en ce que** la butée (25) et la pièce intermédiaire (18) sont en matériaux différents.
